# DEMANDE DE BREVET EUROPEEN

(11) **EP 1 879 278 A1**
(43) Date de publication de la demande: **16.01.2008**
(21) Numéro de dépôt: 07301215.5
(22) Date de dépôt: 09.07.2007
(51) Int. Cl.: H02K 1/24, H02K 15/02

(54) **Rotor de machine tournante électrique et procédé de fabrication**

(30) Priorité: 13.07.2006 FR 0652988
(71) Demandeur: MOTEURS LEROY-SOMER, 16000 Angouleme (FR)
(72) Inventeur: Rignault, Robert, 16430, BALZAC (FR); Porcher, Sébastien, 33820, SAINT PALAIS DE BLAYE (FR)
(74) Mandataire: Tanty, François

(57) **Abrégé**

La présente invention concerne un rotor (1) de machine tournante électrique, comportant un moyeu (3) sur lequel sont disposées des pièces polaires (4), caractérisé en ce que les pièces polaires (4) comportent une portion moulée épousant au moins partiellement la forme du moyeu (3) et/ou le moyeu comporte une portion moulée (15) épousant au moins partiellement la forme des pièces polaires, le moyeu comportant un renfort (6) supportant la portion moulée (15) et/ou la portion moulée (15) comportant des fibres ou des particules de renfort.

## Description

La présente invention concerne les machines électriques tournantes et plus particulièrement les rotors de telles machines.

Le brevet EP 1 249 919 B1 divulgue un rotor à concentration de flux comportant des pièces polaires disposées entre des aimants permanents et maintenues par un moyeu grâce à des liaisons à queue d'aronde.

Le positionnement des pièces polaires est obtenu grâce à un usinage précis du moyeu. Un tel usinage présente l'inconvénient d'être relativement coûteux et l'invention vise à simplifier la fabrication du rotor. En variante, le moyeu est réalisé par injection d'une matière au contact des pièces polaires, lesquelles sont réalisées séparément.

L'invention a pour objet un rotor de machine tournante électrique, comportant un moyeu sur lequel sont disposées des pièces polaires.

Selon un aspect de l'invention, les pièces polaires comportent une portion moulée épousant au moins partiellement la forme du moyeu.

Selon un autre aspect de l'invention, pouvant se combiner au précédent, le moyeu comporte une portion moulée épousant au moins partiellement la forme des pièces polaires, le moyeu comportant un renfort supportant la portion moulée et/ou la portion moulée comportant des fibres ou des particules de renfort.

Grâce à l'invention, les pièces polaires peuvent être plus facilement positionnées correctement relativement à l'axe de rotation de la machine. Par exemple, un usinage précis du moyeu n'est pas nécessaire, la portion moulée pouvant servir à maintenir précisément les pièces polaires relativement à l'axe de rotation de la machine.

Dans un exemple de mise en oeuvre de l'invention, le moyeu comporte une portion moulée épousant au moins partiellement la forme des pièces polaires. Le moyeu peut comporter un renfort supportant la portion moulée, ce renfort pouvant être métallique, étant par exemple venu d'extrusion ou de moulage. Le renfort peut dans ce cas ne pas avoir à être usiné précisément. En variante, le renfort peut comporter une matière synthétique renforcée.

La portion moulée est avantageusement en un matériau amagnétique.

L'un du moyeu et des pièces polaires peut comporter un premier relief et l'autre du moyeu et des pièces polaires peut comporter un deuxième relief coopérant avec le premier pour retenir les pièces polaires sur le moyeu, contre l'action de la force centrifuge.

L'un des premier et second reliefs peut comporter une nervure en forme de queue d'aronde en section transversale et l'autre peut comporter une gorge de forme adaptée à recevoir la nervure.

L'un des premier et second reliefs peut être formé au moins partiellement avec le renfort et un espace peut être ménagé entre le renfort et les pièces polaires pour recevoir la portion moulée.

Le renfort peut être monolithique avec un arbre du rotor ou en variante être rapporté sur un arbre du rotor.

Le renfort et les pièces polaires peuvent venir en contact ou être séparés par la portion moulée.

La portion moulée peut comporter une matière thermoplastique ou une résine polymérisable et comporter alors une charge de particules ou de fibres de renfort, le cas échéant. L'utilisation d'une matière non métallique pour réaliser la portion moulée facilite la mise en oeuvre de l'invention, la température d'injection pouvant être plus basse.

La portion moulée peut encore comporter une matière métallique.

La portion moulée peut s'étendre axialement au-delà des pièces polaires et/ou du moyeu, par exemple former au moins une joue de maintien axial des pièces polaires et/ou d'aimants permanents disposés entre les pièces polaires.

La portion moulée peut encore former au moins un relief contribuant à la ventilation de la machine et/ou une joue d'équilibrage dynamique du rotor.

Les aimants peuvent présenter une épaisseur non constante en section transversale, par exemple une forme généralement trapézoïdale ou en losange.

Les pièces polaires peuvent comporter des paquets de tôles magnétiques superposées. En variante, les pièces polaires peuvent être moulées au contact du moyeu et comporter une charge de particules ayant une susceptibilité magnétique non nulle.

L'invention a encore pour objet, selon un autre de ses aspects, un procédé de fabrication d'un rotor de machine électrique tournante, comportant un moyeu et des pièces polaires disposées sur le moyeu, procédé dans lequel :
- au moins une portion des pièces polaires est moulée au contact du moyeu ou d'une pièce de même forme et/ou,
- au moins une portion du moyeu est moulée au contact des pièces polaires ou d'une pièce de même forme, la portion moulée comportant des fibres ou des particules de renfort et/ou le moyeu comportant un renfort supportant la portion moulée. Le renfort est par exemple métallique et la portion moulée dans un matériau non métallique.

Les pièces polaires peuvent être positionnées pour le moulage relativement à l'axe de rotation de la machine au contact d'un outil de positionnement qui leur est radialement extérieur.

Des aimants peuvent être introduits entre les pièces polaires avant le moulage.

Les aimants peuvent être bloqués entre les pièces polaires par centrifugation ou poussée mécanique, avant que le moulage n'ait lieu.

L'un au moins d'une joue de maintien axial des pièces polaires et/ou des aimants, d'une joue d'équilibrage dynamique et d'un organe de refroidissement de la machine peut être moulé avec la portion précitée.

Le moulage peut s'effectuer dans un moule dans lequel est contenu le rotor.

Le moyeu peut comporter un renfort métallique au contact duquel s'effectue le moulage. En variante, ce renfort est remplacé par une pièce de même forme lors du moulage, et après le démoulage le renfort est introduit dans l'espace ainsi libéré, l'introduction s'effectuant à force par exemple.

Le moulage peut s'effectuer par injection d'une matière thermoplastique ou coulage d'une résine polymérisable.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une vue schématique, de côté, d'un rotor réalisé conformément à l'invention,
- la figure 2 est une section transversale schématique du rotor selon II-II de la figure 1,
- la figure 3 représente le détail III de la figure 2,
- les figures 4 à 7 sont des vues analogues à la figure 3 de variantes de réalisation, et
- la figure 8 est une vue analogue à la figure 2, partielle, d'une autre variante de réalisation.

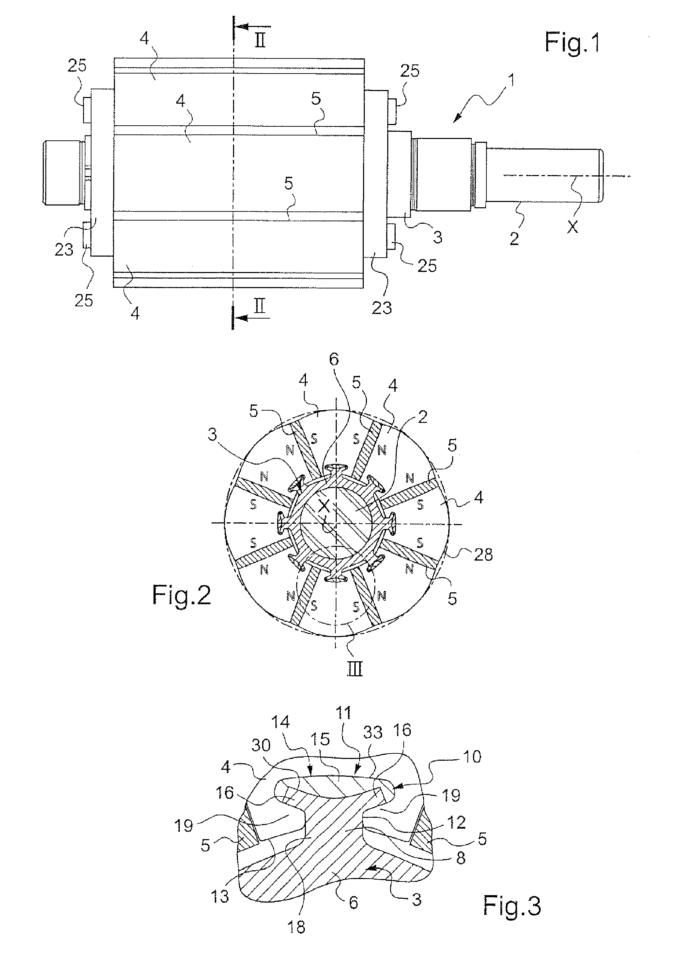

Le rotor 1 représenté à la figure 1 comporte un arbre 2 d'axe longitudinal X sur lequel est monté un moyeu 3 qui porte une pluralité de pièces polaires 4 entre lesquelles sont disposés des aimants permanents 5. Le moyeu 3 ainsi que l'arbre 2 peuvent être réalisés en une matière amagnétique.

Chaque pièce polaire 4 permet de concentrer le flux magnétique des aimants 5 adjacents, lesquels présentent des faces de même polarité N ou S en regard de la pièce polaire 4, comme illustré à la figure 2.

Dans l'exemple considéré, le moyeu 3 est rapporté sur l'arbre 2 mais dans une variante non illustrée le moyeu 3 est réalisé d'un seul tenant avec l'arbre.

Les pièces polaires 4 sont formées par exemple par des paquets de tôles magnétiques superposées et sont accrochées dans l'exemple illustré sur le moyeu grâce à une coopération de formes entre des premiers reliefs 10 formant saillie sur le moyeu 3 et des seconds reliefs 11 en creux des pièces polaires 4.

Dans l'exemple illustré, les premiers reliefs 10 sont formés par des nervures en forme de queue d'aronde et les seconds reliefs sont formés par des gorges de forme correspondante, débouchant chacune par une ouverture 12 sur la surface radialement intérieure 13 des pièces polaires. Ces gorges peuvent être réalisées par découpage des tôles des pièces polaires.

Dans l'exemple considéré, le moyeu 3 comporte d'une part un renfort 6, qui est par exemple métallique ou en une matière synthétique renforcée et d'autre part une portion moulée 15 au contact de ce renfort 6.

Plus précisément, le renfort 6 est réalisé dans l'exemple illustré avec des formes en saillie 8 qui constituent l'armature des premiers reliefs 10, ces formes en saillie comportant chacune un tronc 18 se raccordant à une partie annulaire 7 du renfort 6 et des extensions 16 s'étendant latéralement de part et d'autre du tronc 18, comme on peut le voir notamment sur la figure 3.

La portion moulée 15 s'étend dans l'espace 14 formé entre le renfort 6 et les pièces polaires 4 et occupe dans l'exemple considéré tout cet espace. La présence de la portion moulée 15 permet de bloquer les pièces polaires 4 dans une position prédéfinie relativement à l'axe de rotation de la machine.

Chaque ouverture 12 des pièces polaires 4 est formée dans l'exemple considéré par des retours 19 qui sont écartés d'une distance correspondant sensiblement à la largeur du tronc 18 correspondant. Ces retours 19 permettent aux premiers reliefs 10 de reprendre les efforts centrifuges s'exerçant sur les pièces polaires 4.

La portion moulée 15 est par exemple une matière synthétique qui est injectée ou coulée au cours de la fabrication du rotor dans l'espace 14, comme cela sera détaillé plus loin.

La portion moulée 15 peut s'étendre axialement hors de l'espace 14 afin de former des joues 23 disposées axialement de part et d'autre des pièces polaires 4 et des aimants 5, comme on peut le voir sur la figure 1.

Les joues 23 servent par exemple au maintien axial des pièces polaires 4 et des aimants 5 et peuvent également servir, le cas échéant, de joues d'équilibrage dynamique en pouvant recevoir une ou plusieurs masselottes d'équilibrage du rotor ou en subissant un enlèvement de matière adapté à équilibrer le rotor.

Les joues 23 peuvent également comporter des reliefs 25 assurant un refroidissement de la machine, tels que par exemple des ailettes.

Le cas échéant, la portion moulée 15 peut être métallique, notamment en un métal amagnétique tel que de l'aluminium ou un alliage amagnétique.

Dans l'exemple considéré, les aimants 5 présentent en section transversale une forme générale de losange avec une épaisseur qui passe par un extremum sensiblement à mi-hauteur.

La surface radialement extérieure 28 de chaque pièce polaire 4 peut être cylindrique de révolution, non centrée sur l'axe X, comme illustré, notamment avec un rayon de courbure plus petit que le rayon enveloppant le rotor.

Dans l'exemple de la figure 3, la forme en saillie 8 du renfort 6 constituant l'armature des premiers reliefs 10 présente une face radialement extérieure 30 qui est concave vers l'extérieur.

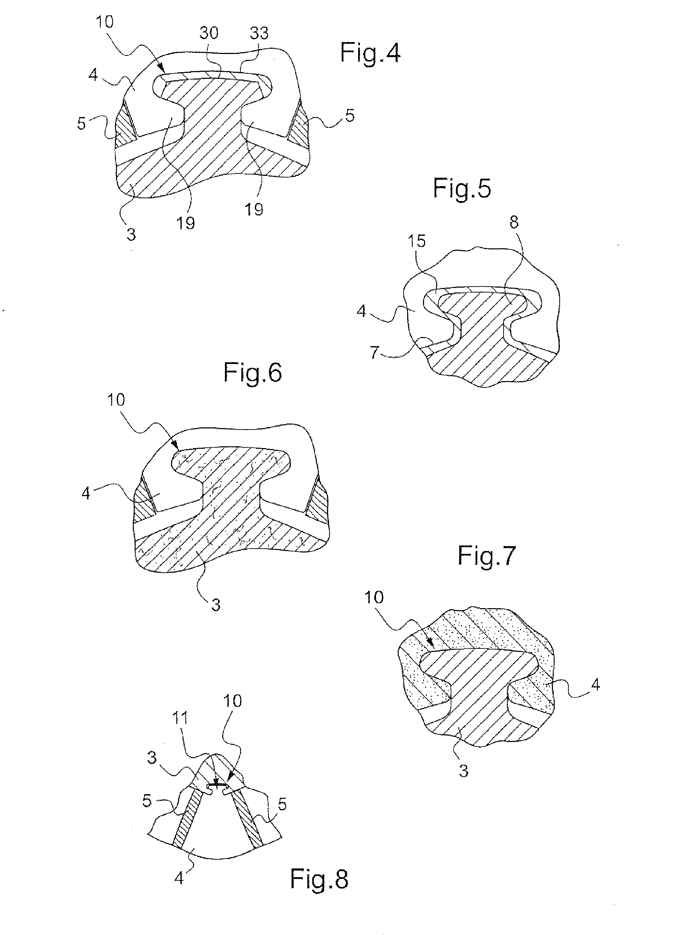

Dans la variante illustrée à la figure 4, cette face 30 est légèrement convexe afin d'épouser la forme du fond 33 de la gorge constituant les seconds reliefs.

Dans la variante illustrée à la figure 5, l'armature 8 s'étend sur tout son pourtour à distance de la pièce polaire correspondante 4 et la portion 15 recouvre entièrement l'armature 8 et éventuellement également la portion annulaire 7 du renfort 6 du moyeu 3.

Dans la variante illustrée à la figure 6, le moyeu 3 est entièrement réalisé par moulage d'une matière synthétique et comporte des fibres ou particules de renfort.

Dans la variante illustrée à la figure 7, le moyeu 3 est par exemple entièrement métallique et réalisé par extrusion et les pièces polaires 4 sont par exemple moulées au contact du moyeu 3 ou d'une pièce de même forme, dans une matière synthétique comportant une charge de particules présentant une susceptibilité magnétique non nulle, par exemple des particules de fer.

Bien entendu, l'invention n'est pas limitée à des reliefs en saillie sur le moyeu et en creux sur les pièces polaires.

A titre d'exemple, on a illustré à la figure 8 un rotor comportant des pièces polaires 4 présentant des seconds reliefs 11 en saillie, engagés dans des premiers reliefs 10 en creux réalisés sur le moyeu 3, lequel peut comporter un renfort 6 ou non.

Pour fabriquer le rotor selon l'un quelconque des exemples ci-dessus, au moins une portion du moyeu est moulée au contact des pièces polaires ou d'une pièce de même forme ou, en variante, au moins une portion des pièces polaires est moulée au contact du moyeu ou d'une pièce de même forme.

Dans le cas où une portion au moins du moyeu est moulée au contact des pièces polaires, ces dernières peuvent être positionnées relativement à l'axe de rotation de la machine avant l'opération de moulage.

Lorsque le moyeu comporte un renfort 6, par exemple un renfort métallique réalisé par extrusion, celui-ci peut être positionné à l'intérieur des pièces polaires, puis l'injection ou le coulage d'un matériau de remplissage peut avoir lieu afin de réaliser la portion moulée du moyeu. En variante, c'est une pièce de même forme que le renfort qui est utilisé pour le moulage.

Le positionnement des pièces polaires relativement à l'axe de rotation de la machine peut s'effectuer par exemple au moyen d'un outil de positionnement, par exemple radialement extérieur aux pièces polaires, par exemple un outil ayant une forme généralement cylindrique avec sur sa surface radialement intérieure une succession de lobes destinés à épouser la forme de la surface radialement extérieure des pièces polaires 4. En variante, l'outil de positionnement comporte par exemple des doigts engagés dans des perçages des pièces polaires. Le positionnement peut s'effectuer autrement encore.

Les aimants 5 peuvent être mis en place entre les pièces polaires 4 avant l'injection ou coulage du matériau de remplissage et les aimants 5 peuvent, avant le moulage, être bloqués par coincement entre les pièces polaires 4, grâce par exemple à une centrifugation du rotor ou une poussée mécanique.

Une fois le matériau de remplissage solidifié ou polymérisé, le rotor peut être démoulé et le cas échéant être de nouveau centrifugé afin d'accroître le serrage des aimants entre les pièces polaires 4.

L'arbre 2 peut être présent ou non à l'intérieur des pièces polaires 4 lors de l'injection ou coulage du matériau de remplissage. Le cas échéant, l'arbre peut être réalisé de façon monolithique avec le moyeu, par injection ou coulage du matériau de remplissage.

Dans le cas où les pièces polaires 4 sont moulées au contact du moyeu 3, ou d'une pièce de même forme, celui-ci ou celle-ci peut être mis en place dans un moule de forme adaptée et l'injection ou le coulage du matériau de remplissage peut avoir lieu autour. Les aimants permanents peuvent être disposés à l'intérieur du moule lors de l'injection ou du coulage du matériau de remplissage ou ensuite, dans des intervalles ménagés entre les pièces polaires par des formes du moule ou des pièces prévues à cet effet.

Dans une variante encore, le moyeu est au moins partiellement réalisé par moulage de même que les pièces polaires.

Le cas échéant, le matériau de remplissage est injecté ou coulé dans un moule permettant de réaliser au moins un relief de refroidissement de la machine et/ou au moins une joue d'extrémité s'étendant axialement hors du moyeu et/ou des pièces polaires et/ou des aimants permanents, comme mentionné précédemment.

L'invention n'est pas limitée aux exemples qui viennent d'être décrits, et les caractéristiques des différents exemples peuvent notamment se combiner au sein de variantes non illustrées.

Les aimants peuvent présenter une autre forme, par exemple une forme trapézoïdale, comme décrit dans le brevet EP 1 249 919 B1.

Les pièces polaires peuvent aussi présenter une forme différente.

Les premiers et seconds reliefs peuvent être réalisés avec des formes autres que celles illustrées.

La portion moulée peut ne pas dépasser axialement du moyeu ou des pièces polaires, le maintien axial de celles-ci pouvant s'effectuer au moyen de joues rapportées, lesquelles peuvent être réalisées dans un matériau autre que le matériau de remplissage.

Dans le cas où au moins une joue rapportée est utilisée, celle-ci ou celles-ci peuvent par exemple être maintenues plaquées contre les pièces polaires au moyen de tirants traversant les pièces polaires à la faveur de perçages réalisés à travers celles-ci. Les tirants peuvent être créés, le cas échéant, par l'opération de moulage du matériau de remplissage.

L'invention s'applique à un rotor intérieur, extérieur ou à flux magnétique axial.

L'expression « comportant un » doit être comprise comme étant synonyme de « comportant au moins un ».

## Revendications

1. Rotor (1) de machine tournante électrique, comportant un moyeu (3) sur lequel sont disposées des pièces polaires (4), **caractérisé en ce que** :
- les pièces polaires (4) comportent une portion moulée épousant au moins partiellement la forme du moyeu (3) et/ou,
- le moyeu comporte une portion moulée (15) épousant au moins partiellement la forme des pièces polaires, le moyeu comportant un renfort (6) supportant la portion moulée (15) et/ou la portion moulée (15) comportant des fibres ou des particules de renfort.

2. Rotor selon la revendication 1, les pièces polaires (4) comportant une portion moulée épousant au moins partiellement la forme du moyeu (3).

3. Rotor selon la revendication 1, le moyeu comportant une portion moulée (15) épousant au moins partiellement la forme des pièces polaires et un renfort (6) supportant la portion moulée (15).

4. Rotor selon la revendication 1, le moyeu comportant une portion moulée (15) épousant au moins partiellement la forme des pièces polaires, cette portion moulée (15) comportant des fibres ou des particules de renfort.

5. Rotor selon l'une quelconque des revendications 1 et 3, le renfort (6) étant métallique.

6. Rotor selon la revendication 5, le renfort étant venu d'extrusion ou de moulage.

7. Rotor selon l'une quelconque des revendications 1 et 3, le renfort comportant une matière synthétique renforcée.

8. Rotor selon l'une quelconque des revendications précédentes, la portion moulée (15) étant en un matériau amagnétique.

9. Rotor selon l'une quelconque des revendications précédentes, l'un du moyeu et des pièces polaires comportant un premier relief (10) et l'autre du moyeu et des pièces polaires comportant un deuxième relief (11) coopérant avec le premier pour retenir les pièces polaires sur le moyeu contre l'action de la force centrifuge.

10. Rotor selon la revendication 9, l'un des premier et second reliefs comportant une nervure en forme de queue d'aronde en section transversale et l'autre comportant une gorge de forme adaptée à recevoir la nervure.

11. Rotor selon les revendications 3 et 10, l'un des premier et second reliefs étant formé au moins partiellement avec le renfort (6).

12. Rotor selon la revendication 11, un espace (14) étant ménagé entre le renfort (6) et les pièces polaires (4) pour recevoir la portion moulée (15).

13. Rotor selon la revendication 3, le renfort (6) étant monolithique avec un arbre (2) du rotor.

14. Rotor selon la revendication 3, le renfort (6) étant rapporté sur un arbre (2) du rotor.

15. Rotor selon la revendication 5, le renfort (6) et les pièces polaires venant en contact.

16. Rotor selon la revendication 5, le renfort et les pièces polaires étant séparés par la portion moulée.

17. Rotor selon l'une quelconque des revendications précédentes, la portion moulée (15) comportant une matière thermoplastique.

18. Rotor selon l'une quelconque des revendications 1 à 16, la portion moulée (15) comportant une résine polymérisée.

19. Rotor selon l'une quelconque des revendications 1 à 16, la portion moulée comportant une matière métallique.

20. Rotor selon l'une des revendications 17 et 18, la portion moulée (15) comportant une charge de particules ou de fibres de renfort.

21. Rotor selon l'une quelconque des revendications précédentes, la portion moulée (15) s'étendant axialement au-delà des pièces polaires et/ou du moyeu.

22. Rotor selon l'une quelconque des revendications précédentes, la portion moulée (15) formant au moins une joue (13) de maintien axial des pièces polaires.

23. Rotor selon l'une quelconque des revendications précédentes, comportant des aimants permanents (5) disposés entre les pièces polaires (4).

24. Rotor selon la revendication 23, la portion moulée formant au moins une joue (23) de maintien axial des aimants (5).

25. Rotor selon l'une quelconque des revendications précédentes, la portion moulée (15) formant au moins un relief (25) contribuant à la ventilation de la machine.

26. Rotor selon l'une quelconque des revendications précédentes, la portion moulée (15) formant au moins une joue (13) d'équilibrage dynamique du rotor.

27. Rotor selon la revendication 23, les aimants (5) présentant une épaisseur non constante en section transversale.

28. Rotor selon la revendication précédente, les aimants présentant en section une forme généralement trapézoïdale.

29. Rotor selon la revendication 27, les aimants présentant en section une forme généralement en losange.

30. Rotor selon l'une quelconque des revendications précédentes, les pièces polaires (4) comportant des paquets de tôles magnétiques superposées.

31. Rotor selon l'une quelconque des revendications 1 à 29, les pièces polaires (4) étant moulées au contact du moyeu (3) et comportant une charge de particules ayant une susceptibilité magnétique non nulle.

32. Rotor selon la revendication 1, comportant au moins une joue rapportée sur les pièces polaires et maintenue contre les pièces polaires au moyen de tirants traversant les pièces polaires à la faveur de perçages réalisés dans ces dernières.

33. Rotor selon la revendication 32, les tirants étant créés lors de l'opération de moulage de la portion moulée.

34. Procédé de fabrication d'un rotor de machine électrique tournante, comportant un moyeu (3) et des pièces polaires (4) disposées sur le moyeu, procédé dans lequel :
- au moins une portion des pièces polaires est moulée au contact du moyeu ou d'une pièce de même forme et/ou,
- au moins une portion (15) du moyeu est moulée au contact des pièces polaires ou d'une pièce de même forme, la portion moulée comportant des fibres ou des particules de renfort et/ou le moyeu comportant un renfort (6) supportant la portion moulée (15).

35. Procédé selon la revendication 34, dans lequel les pièces polaires (4) sont positionnées pour le moulage relativement à l'axe de rotation de la machine au contact d'un outil de positionnement qui leur est radialement extérieur.

36. Procédé selon l'une des revendications 34 et35, des aimants (5) étant introduits entre les pièces polaires avant le moulage.

37. Procédé selon la revendication précédente, dans lequel les aimants sont bloqués entre les pièces polaires par centrifugation ou poussée mécanique avant que le moulage ne soit effectué.

38. Procédé selon la revendication 34, dans lequel l'un au moins d'une joue (23) de maintien axial des pièces polaires et/ou des aimants, d'une joue (23) d'équilibrage dynamique et d'un organe de refroidissement de la machine, est moulé avec ladite portion (15).

39. Procédé selon la revendication 34, dans lequel le moulage s'effectue dans un moule dans lequel est contenu le rotor.

40. Procédé selon l'une quelconque des revendications 34 à 39, dans lequel le moyeu (3) comporte un renfort (6) au contact duquel s'effectue le moulage.

41. Procédé selon l'une quelconque des revendications 34 à 40, dans lequel le moulage s'effectue par injection d'une matière thermoplastique.

42. Procédé selon l'une quelconque des revendications 34 à40, dans lequel le moulage s'effectue par coulage d'une résine polymérisable.
